# EUROPÄISCHE PATENTSCHRIFT

(11) **EP 1 771 385 B1**
(45) Veröffentlichungstag und Bekanntmachung des Hinweises auf die Patenterteilung: **15.09.2010**
(21) Anmeldenummer: 05773741.3
(22) Anmeldetag: 16.07.2005
(51) Int. Cl.: C02F 1/34

(54) **HYDRODYNAMISCHE HOMOGENISATION**
HYDRODYNAMIC HOMOGENIZATION
HOMOGENEISATION HYDRODYNAMIQUE

(30) Priorität: 26.07.2004 DE 102004036181
(43) Veröffentlichungstag der Anmeldung: 11.04.2007
(73) Patentinhaber: Kolb, Frank Reiner, 65604 Elz (DE)
(72) Erfinder: Kolb, Frank Reiner, 65604 Elz (DE)
(74) Vertreter: Mollekopf, Gerd Willi
(86) Internationale Anmeldenummer: PCT/EP2005/007776
(87) Internationale Veröffentlichungsnummer: WO 2006/010510

(56) Entgegenhaltungen:
- WO-A-2004/050566
- DE-A1- 10 019 918
- KUNZ P M ET AL: "ERKENNTNISSE UND ERFARUNGEN AUS PRAKTISCHEN ANWENDUNGEN DER KLAERSCHLAMM-DESINTEGRATION FINDINGS AND EXPERIENCES FROM THE PRACTICAL APPLICATION OF SEWAGE SLUDGE DISINTEGRATION" KORRESPONDENZ ABWASSER, ABWASSERTECHNISCHE VEREINIGUNG, ST. AUGUSTIN, DE, Bd. 43, Nr. 7, Juli 1996 (1996-07), Seiten 1289-1298, XP000638760 ISSN: 0341-1540

## Beschreibung

Im Bereich der Umweltschutztechnik treten bei vielen Reinigungsprozessen als Schadstoffsenke Schlämme auf, wie z. B. in der Abwasserreinigung. Diese Schlämme bestehen zu einem großen Teil aus einer Trägerflüssigkeit, i. a. Wasser, und organischen sowie mineralischen Partikeln. Die organischen Partikel in den Schlämmen bestehen aus einzelnen oder Flocken von Mikroorganismen und Polymeren, wobei diese in die Gruppe der natürlichen Bio-Polymere, sogenannten Extrazellulären Substanzen (EPS), und in künstliche Polymere, die den Reinigungsprozess weitergehend unterstützen sollen, unterschieden werden können. Die anorganischen Schlammbestandteile bestehen überwiegend aus kristallinen Komplexen und Polymeren. Die Polymerenbestandteile der Schlämme besitzen aktive Eigenschaften, wodurch deren rheologische Eigenschaften und deren Entwässerbarkeit entscheidend beeinflußt werden können. Bei den organischen Schlämmen können besonders durch die Bio-Polymere zusätzlich die Stabilisierungseigenschaften verbessert und so letztendlich die Menge minimiert werden.

Die Auswirkungen und Interaktionen zwischen den einzelnen Schlammbestandteilen sowie deren positive Beeinflussung durch die nachfolgend beschriebene Erfindung werden für Klärschlämme, welche bei der Abwasserreinigung auftreten, verdeutlicht.

In der Abwasserreinigung treten unterschiedliche Schlämme, wie z. B. Primärschlamm aus der Vorklärung, Sekundärschlamm aus der Belebung und Tertiärschlamm aus der Fällung auf. Diese Schlämme werden entweder aerob oder anaerob stabilisiert. Die anaerobe Stabilisierung (Faulung) ist ab einer Anlagengröße von 20.000 EGW die kostengünstigste Methode, so daß sie überwiegend eingesetzt wird. In diesen Anlagen wird die Umwälzung und damit eine Vergleichmäßigung des Reaktionsbehälterinhaltes durch Mischen beispielsweise mit Rührer, Gaseinpressung oder Pumpenumwälzung ermöglicht, wobei eine vollständige Durchmischung aufgrund der Größe der Reaktionsbehälter und deren geometrischer Ausbildung nicht verwirklicht werden kann. Bei diesen Anlagen wird der Stand der Technik durch Zufuhr- und Rezirkulationsleitungen gekennzeichnet, in denen die Verfahren zur Durchmischung und Umwälzung der Schlämme angewendet bzw. die Vorrichtungen dafür zwischengeschaltet werden können.

Die unterschiedlichen Schlammarten weisen in ihrer Zusammensetzung große Unterschiede auf, so daß Schwimmschlamm einen Feststoffgehalt von kleiner 0,5 % und in der Faulung ein Mischschlamm eingesetzt wird, der etwa einen Feststoffgehalt von 6 bis 8 % aufweist. Unabhängig von ihrer absoluten Zusammensetzung setzen sich alle Schlämme aus einer Trägerflüssigkeit, in der Abwasserreinigung Wasser, Mikroorganismen, Bio-Polymeren, Polymere, organischen (Fette, Proteine usw.) und anorganischen (Stickstoffverbindungen, Phosphate usw.) Schmutzstoffen sowie mineralischen Stoffen (Sand, Split usw.) zusammen. Diese Inhaltsstoffe bilden innerhalb der Trägerflüssigkeit Agglomerate aus, in denen die Mikroorganismen mit einem Teil der Bio-Polymere sich zu Flocken zusammenschließen und die anderen Substanzen in der Trägerflüssigkeit partikulär oder gelöst vorhanden sind. Die Flockenstruktur der Mikroorganismen ist heterogen, so daß die Flocken ein Knäuel von kugel- und stäbchenförmigen Einheiten bilden. Aufgrund des aeroben und / oder anaeroben biochemischen Umsetzungsprozesses entstehen Gasblasen (aerob: überwiegend Stickstoff und Sauerstoff aus der Belüftung, anaerob: überwiegend Methan und Kohlendioxid), die sich aufgrund des spezifischen Volumens zum Oberflächenverhältnis überwiegend an die stäbchenförmigen Mikroorganismen anheften und diese flotieren. Durch diesen Vorgang werden die Mikroorganismen dem aktiven Reinigungsprozeß entzogen und behindern ihn durch die entstehenden Flotatdecken (Schwimmschlamm in der Belebung und Nachklärung, Schaum in der Faulung, Blähschlamm in der Nachklärung) zusätzlich.

Die Probleme der Flotatdeckenbildung und dadurch die Entziehung der Mikroorganismen aus dem aktiven Reinigungsvorgang sowie die Verbesserung des gesamten Reinigungsprozeßes können durch eine Homogenisierung der Schlämme sowohl in den anaeroben als auch in den aeroben Stufen gelöst bzw. erzielt werden. Durch eine vollständige Homogenisierung wird die Oberfläche für den Stoffaustausch erhöht, die Bio-Polymere und Schmutzstoffe für die Mikroorganismen zur biologischen Umsetzung vollständig zugänglich gemacht und die stäbchenförmigen Mikroorganismen von anhaftenden Gasblasen befreit, so daß sie nicht mehr aufschwimmen können.

Daß diese Wirkmechanismen erzielt werden können, wird durch Untersuchungen zur Desintegration, also der Zerstörung der Mikroorganismen bis zum Zellaufschluss, bestätigt (Verfahren und Anwendungsgebiete der mechanischen Klärschlammdesintegration, Korrespondenz Abwasser, Jhrg. 47, 4/2000, Seite 570-576; Verfahrensvergleich und Ergebnisse der mechanischen Klärschlammdesintegration, Korrespondenz Abwasser, Jhrg. 48 3/2001, Seite 393-400; Mechanische Zerkleinerung von Bläh- und Schwimmschlämmen, Wasser-Abwasser-Praxis, 3/99, Seite 25-31). Um diese Ergebnisse zu erzielen, sind jedoch Energieeinträge von mehr als 1.000 kJ/m³ zu behandelnden Schlammes notwendig. Die eingesetzten Verfahren eignen sich für eine Übertragung in den technischen Maßstab aufgrund ihrer geringen Betriebsstabilität (Hochdruckhomogenisator), ihrer hohen Wartungsintensität (Rührwerkskugelmühle) oder Kosten (Ultraschall) nur bedingt, weil sie alle auf einen vollständigen Zellaufschluß ausgelegt sind.

Eine weitere Gruppe von mechanischen Behandlungsverfahren besitzt einen Strömungskanal (DE 202 20 566 U1, DE 102 14 689 A1), der von seiner Ausbildung einer Laval-Düse nachempfunden ist. Dabei soll eine Veränderung in der Schlammsuspension durch hydrodynamische Scherfelder verursacht werden. Durch die Scherfelder sollen Scherspannungen zu einer Zerstörung der mikrobiellen Struktur genutzt und Kavitation erzeugt werden, damit die Zellwände der Mikroorganismen aufgeschlossen werden können. Eine Zerkleinerung von Mikroorganismen auf rein hydrodynamischem Wege erfordert jedoch einen relativ hohen Energieaufwand, da zur Entstehung der Kavitationsblasen eine hohe Strömungsgeschwindigkeit in einer Rohrleitungsverengung erzeugt werden muß, um aufgrund der Bernoulli-Gleichung den statischen Druck unterhalb des Dampfdruckes abzusenken. Dadurch nimmt der Druckverlust überproportional zu und die stoffbezogene Energie wird höher sowie die Durchsatzleistung geringer. Weiterhin muß berücksichtigt werden, daß die Kavitationsblasen bei ihrer Implosion ein hohes Geräuschniveau verursacht, so daß eine aufwendige und kostenintensive Lärmkapselung notwendig ist und sie nur eine geringe Eindringtiefe in die Trägerflüssigkeit aufweisen, so daß die Zerstörung der Mikroorganismen nur in geringem Umfang erfolgen kann (im technischen Maßstab 3 - 10 %, Mehr Gas - weniger Schlamm, Wasser-Luft-Boden, 9/2004, Seite 18/21). Eine Veränderung des Verhältnisses von speziellen Mikroorganismen-Gruppen (fädige gegenüber flockenbildenden) in der Schlammsuspension durch Scherfelder, wie in DE 101 55 161 A1 dargelegt, scheint unmöglich. Da keine ausreichenden selektiven Kenngrößen bezüglich der physikalischen Parameter von Mikroorganismen in Mischbiozönosen bekannt sind, um eine Regelung der Scherfelder in dieser Weise zu verwirklichen.

Ziel aller bisher entwickelten Verfahren ist es deshalb, durch die Zerstörung der Mikroorganismen den Prozeß der Schlammbehandlung zur verbessern, um die organischen Inhaltsstoffe besser und schneller umzusetzen. Bisher wurden die unterschiedlichen rheologischen Eigenschaften sowie der positive Beitrag aller Mikroorganismen und Polymere für die Umsetzung der Schmutzstoffe innerhalb der Schlammbehandlung in einem nicht ausreichenden Maße berücksichtigt.

Die rheologischen Eigenschaften der Schlämme können je nach Feststoffgehalt in ein NEWTONsches und nicht-NEWTONsches Fließverhalten bei einem TrockensubstanzGehalt von etwa 0,5 % unterschieden werden (kleiner 0,5 % NEWTONsches Fließverhalten), wobei der Begriff nicht-NEWTONsches Verhalten in diesen Ausführungen weiter gefasst und alle anderen Fließeigenschaften beinhalten soll. Da Klärschlamme ab einem bestimmten Feststoffgehalt ein ausgeprägtes thixotropes Verhalten aufweisen, werden diese Mechanismen besonders berücksichtigt.

Bei größeren Trockensubstanzgehalten von etwa 0,5 % nimmt die Viskosität mit zunehmender Scherrate (Homogenisierung) ab (Einfluß der Viskosität auf den Sauerstoffeintrag, Abschlußbericht, Max-Buchner-Stiftung, Kennziffer 2281, 11/2003). Ab einem Feststoffgehalt von etwa 2,5 % besitzen Klärschlämme thixotrope Eigenschaften, das bedeutet, daß die Schlammsuspension ohne Scherbeanspruchung wieder ihre Ausgangsstruktur und damit -viskosität zurückbildet (Rheologische Charakterisierung flüssiger Klärschlämme, Korrespondenz Abwasser, 44. Jhrg., 9/1997).

Dieses rheologische Phänomen beschreibt die komplexen Wechselwirkungen zwischen Molekülen oder Partikeln für pseudoplastische Flüssigkeiten, die unter dem Einfluß von wachsenden Schubspannungen niedrigviskoser werden. Dem Verhalten liegt zumeist eine Orientierung und Entschlaufung von Fadenmolekülen (Polymeren) oder der Partikelformveränderung von suspendierten Partikeln in Fließrichtung (Schlammflocken) zugrunde. Da die unterschiedlichen Teilkomponenten der Schlämme oberflächenaktive Eigenschaften besitzen, können durch spezielle chemisch / physikalische Bindungskräfte die Verschiebbarkeit dieser Komponenten gegeneinander beeinflußt und durch Druck- und Schubkräfte zerstört werden.

Die Bindungskräfte bilden in der Schlammsuspension eine dreidimensionale Gerüststruktur, die aufgrund ihrer Eigenschaften auch als "Gel" bezeichnet wird. Wenn das Gel zerfällt, nimmt die Viskosität so lange ab, bis sie bei einer gegebenen konstanten Schubspannung den kleinstmöglichen Wert, den "Solzustand", erreicht hat. Die Änderung vom Gel- zum Solzustand und umgekehrt ist bei thixotropen Suspensionen beliebig oft reproduzierbar (Einführungen in die Rheologie, Gebrüder Haake GmbH, Karlsruhe, 2000). Diese Zustandsänderung kann nur durch die teilweise oder vollständige Zerstörung der Teilkomponenten unterbrochen werden, wodurch die Schlämme ihre thixotropen Eigenschaften verlieren.

Zur Veränderung der "Gelmatrix" des Schlammes kann zusätzlich auch die Kavitation eingesetzt werden. Dieses Behandlungsverfahren ist in den bisherigen Untersuchungen nicht nähe betrachtet worden, da die Zielsetzung der bekannten Kavitationsverfahren immer in einer Zellzerstörung bestand. Durch den kontrollierten Einsatz der strömungsmechanischen Kavitation können jedoch die extrazellulären Substanzen (EPS) und die "synthetischen" Polymere gezielt verändert werden. Der besondere Effekt beeinflußt die aktiven Zentren der EPS und der Polymere, so daß dadurch die Gelstruktur des Schlammes aufgelöst wird. Für diese Veränderungen ist, im Gegensatz zu den obengenannten Verfahren, nur eine geringfügige Unterschreitung des Dampfdruckes notwendig. Die geringfügige, auch temporäre, Dampfdruckunterschreitung verursacht besonders kleine Kavitationsblasen (Analogie zur thermischen Verdampfung von Flüssigkeitsgemischen, Grundoperation der chemischen Verfahrenstechnik, 10. Auflage, Leipzig 1994). Die Implosion dieser Dampfblasen führt zu einer Schädigung der EPS und der Polymere, gleichzeitig werden die Implosionsgeräusche wesentlich herabgesetzt. Eine aufwendige Lärmkapselung muß bei der Verwendung dieser Kavitationstechnik, die in ihren Dampfblasen-Erscheinungsbild ähnlich dem von Ultraschall-Reinigungsbädern ist, nicht erfolgen.

In den nachfolgenden Ausführungen wird überwiegend zwischen NEWTONschem und nicht-NEWTONschem Fließverhalten unterschieden, wobei die Ausführungen für das nicht-NEWTONsche Fließverhalten ab einem Feststoffgehalt von mehr als 2,5 % auf das thixotrope Verhalten von Klärschlammen übertragen werden kann (Falls das thixotrope Verhalten im Vordergrund der Betrachtungen steht, wird dies kenntlich gemacht.) Das verbesserte Fließverhalten mit zunehmender Homogenisierung führt jedoch auch zu einer verbesserten stofflichen Umsatzrate, da alle beteiligten Komponenten verfügbar sind. Dies wird besonders bei den in den organischen Schlämmen enthaltenden Enzymen deutlich. Die Aktivität der Enzyme kann schon aufgrund von geringen mechanischen Behandlungskräften gesteigert werden (Untersuchungen auf der KA Kitzbühl, unveröffentlicht).

Weiterhin muß in einem größeren Maße als bisher berücksichtigt werden, daß besonders bei organischen Schlämmen alle Mikroorganismen und Polymere einen positiven Beitrag zur Umsetzung der Schmutzstoffe leisten, wenn eine ausreichende Stoffaustauschfläche zur Verfügung steht und diese Stoffe in der Trägerflüssigkeit gelöst gehalten werden können.

Die DE 100 19 918 A1 offenbart eine Desagglomerationsanordnung, bei der eine Behandlungseinheit einen Einlassabschnitt und einen Auslassabschnitt (Prallkörper) aufweist. Dem Einlassabschnitt wird eine Schlammsuspension mit hohem Druck zugeführt, der gegen einen Dichtungsabschnitt bzw. Ventilkörper ansteht. Der Dichtungsabschnitt ist axial innerhalb des Prallkörpers verschiebbar gelagert und wird mittels eines Federelements gegen einen im Einlassabschnitt angeordneten Ventilsitz gepresst. Bei ausreichend aufgebautem Druck öffnet der Dichtungsabschnitt schlagartig das Ventil und die Schlammsuspension wird unter Auftreten von hohen Zerreiß- und Scherkräften extrem entspannt. Die Desagglomerationsstufe arbeitet diskontinuierlich, indem zunächst ein hoher Druck aufgebaut wird, dieser schlagartig unter Druckabbau entspannt wird, wonach aufgrund des geringeren Drucks im Einlassabschnitt der Dichtungsabschnitt den Ventilsitz wieder verschließt, so dass sich für den nächsten Zyklus erneut ein hoher Druck aufbauen kann.

Bei dem Strahlkollisionsreaktor der WO 2004/050566 A2 werden über zwei seitlich angeordnete Düsen Schlammstrahlen axial aufeinander gerichtet werden, wobei durch den Zusammenprall der beiden Klärschlammstrahlen ein Aufschluss von Agglomeraten erreicht wird. Die Ableitung des abgeschlossenen Klärschlamms erfolgt durch Einleiten eines Gasstroms in die Ebene des Aufeinanderpralls der Klärschlammstrahlen und das Austragen durch eine der Gasstromeinleitung gegenüberliegende Öffnung im Strahlkollisionsreaktor.

Die Veröffentlichung "Erkenntnisse und Erfahrungen aus praktischen Anwendungen der Klärschlamm-Desintegration", P.M. Kunz, et al., Schlämme, 43. Jahrgang, 7/96, Seite 1289 ff, schlägt den Aufschluss von Agglomeraten in einer Suspension durch schlagartige Entspannung einer Klärschlammsuspension vor, wobei hier der Druckabfall derart hoch ist, dass bei der Entspannung der Dampfdruck der Flüssigkeit unterschritten wird, so dass eine Dampfblasen-Kavitation auftritt. Die Kavitation bewirkt hier einen Aufschluss von Mikroorganismen durch Herausreißen von Bruchstücken aus der Zellwand.

Es ist Aufgabe der Erfindung, eine Vorrichtung zur Homogenisierung von Klärschlamm vorzusehen, bei der bei einfachem Aufbau und kostengünstigem Betrieb eine effiziente Desagglomeration und Homogenisierung erreicht wird.

Diese Aufgabe wird mit den Merkmalen des Anspruchs 1 gelöst. Vorteilhafte Ausgestaltungen sind Gegenstand von Unteransprüchen.

Die Vorrichtung weist einem Druckerzeuger und eine Behandlungseinheit mit mindestens einem Zu- und Ablauf sowie eine Desagglomerationssfufe und eine Homogenisierungsstufe auf. Die Durchströmung der Stufen erfolgt, in dem fur eine möglichst vollständige Homogenisierung der Schlammsuspension Desagglomerationszuerst die Stufe zur Zerstörung der Agglomerate und anschließend die Homogenisierungsstufe zur Einmischung der Polymere, EPS und der Mikroorganismen in die Schlammsuspension durchströmt wird.

Eine Stufe ist so ausgebildet, daß die unterschiedlichen partikulären Agglomerate zerstört und durch hydromechanisches Verwirbeln in die Trägerflüssigkeit eingemischt werden. Diese Stufe wird in den nachfolgenden Ausführungen als Desagglomerationsstufe bezeichnet Die Zerstörung der Agglomerate in dieser Stufe erfolgt durch Umlenken der Strömung und dadurch bedingt ausschließlich durch Partikel-Partikel- bzw. Partikel-Wand-Stöße. An den Umlenkstellen des Kanals entstehen hydromechanische Abreiß- und Umlenkwirbel, die ein Einmischen der entstehenden Komponenten in die Schlammsuspension bewirken. Die Winkel innerhalb des Kanals sind an die rheologischen Bedingungen des jeweiligen Schlamms angepaßt und hängen im besonderen von dessen Viskosität ab.

Die Intensität der Durchmischung in der Desagglomerationsstufe wird durch die Anzahl der Umlenkstellen und den Betrieb des Druckerzeugers festgelegt. Mit steigender Anzahl der Umlenkstellen nehmen die Ablösewirbel und damit die Intensität der Durchmischung immer weiter zu. Eine homogenere Suspension wird mit steigendem Druck erzielt, da die Wirkung der Desagglomeration und Zerkleinerung durch Partikel-Partike- und Partikel-Wand-Stöße verbessert wird.

In einer weiteren Stufe wird in einem Spalt die Durchmischung der Schlammsuspension mit allen Inhaltsstoffen, im besonderen mit den Mikroorganismen, den Enzymen, den extrazellulären Substanzen und Polymeren durchgeführt. Diese Stufe wird in den nachfolgenden Ausführungen als Homogenisierungsstufe bezeichnet. Als treibende Kraft für die Durchmischung im Spalt wird die Wandschubspannung genutzt. Im Gegensatz zu anderen Verfahren wird vorteilhaft die Behandlung des Schlammes nicht durch eine Querschnittverengung mit hohen Strömungsgeschwindigkeiten erzielt, sondern das besonders große Verhältnis von benetzter zur durchströmten Fläche eingesetzt, um dadurch die Wandschubspannungen und die Eindringtiefe in das Medium zu erhöhen. Für die Durchmischung aufgrund der Wandschubspannungen reichen bei der Durchströmung in dieser Stufe Reynoldszahlen von weniger als 80.000 aus, so daß keine vollturbulente Strömung erzielt und die Druckverluste minimiert werden können.

Bei der Vorrichtung ist der Kanal der Desagglomerationsstufe nicht linear, sondern konzentrisch zur Zufuhröffnung ausgebildet. Dadurch kann eine besonders kompakte Einheit aufgebaut oder bei gleichen Abmessungen der linearen und konzentrischen Einheit, die letztere mit höheren Durchsatzleistungen betrieben werden. Daher ist es für die Vorrichtung von besonderem hydraulischen als auch fertigungstechnischen Vorteil, dass die Homogenisierungsstufe als Ringspalt ausgebildet wird.

Für die Einmischung von Polymeren und Mikroorganismen in die Schlammsuspension bietet der Ringspalt als Homogenisierungsstufe gegenüber anderen Geometrien, im besonderen gegenüber einer Verengung des Kanals, den Vorteil, den äquivalenten hydraulischen Durchmesser nahezu zu halbieren. Dadurch können in dieser Weiterbildung die Einflüsse der Wandschubspannungen verbessert werden. Dieser Effekt kann durch die Parallelschaltung von mehreren Ringspalten vorteilhafterweise erhöht werden.

Eine besonders kompakte Einheit wird dadurch erreicht, dass die beiden funktionalen Stufen in einer Stufe realisiert sind. Dies wird dadurch erzielt dass, dass die Stufe aus einem Außen- und Innenteil besteht, wobei das Innenteil aus einem Block besteht, der zentrisch im Außenteil angeordnet ist. Die Form des Blockes ist so gestaltet, daß eine Aufteilung und Umlenkung der Schlammsuspension innerhalb der Zuführung entsteht und anschließend des Ringspalt gebildet wird, in dem durch die Wandschubspannungen eine Einmischung und Homogenisierung der Schlammsuspension erfolgt.

Vorteilhaft werden bei einem hohen mineralischen Anteil von mehr als 0,5 %, die Oberflächen gehärtet, damit der Kanal durch die Partikelstöße nicht zerstört wird. Besonders vorteilhaft bei diesem Verfahren ist, daß sich keine bewegten störanfälligen Teile in der Strömung befinden, sondern der Effekt alleine auf hydrodynamische Einflußgrößen zurückzuführen ist.

Vorteilhaft sind die Durchströmflächen so ausgeführt, daß praktisch keine Erhöhung der Strömungsgeschwindigkeit erfolgt.

Wenn die Viskosität des Schlamms mindestens 5mal größer als die von Wasser ist, sollte mindestens ein Umlenkwinkel in der Desagglomerationsstufe mindestens 90° sein. Bei geringeren Viskositäten kann der Umlenkwinkel kleiner 90° gewählt werden.

Voreilhaft ist die Durchströmfläche des Spaltes bzw. der Spalte so gewählt, daß bei einer Viskosität des Mediums von weniger als dem 5fachen von Wasser keine Erhöhung der Strömungsgeschwindigkeit stattfindet, wobei das Breitenzu Längen-Verhältnis vorteilhafterweise mindestens 1 zu 10 beträgt. Bei größerer Viskosität des Mediums kann die Anzahl der durchströmten Spalte erhöht oder die Spaltflächen in Durchströmrichtung reduziert werden, so daß der Einfluß der Wandschubspannungen für die Durchmischung gesteigert werden kann.

Durch mehrere parallel beschickte Ringspalte wird bei gleicher mittlerer Durchströmgeschwindigkeit in besonders vorteilhafter Weise die Wirkung der Eindringtiefe der Wandschubspannungen auf die partikulären und gelösten Bestandteile in der Hauptmischzone erhöht.

Eine Weiterbildung der Ansprüche besteht darin, daß die Schlammsuspension in der Desagglomerationsstufe 2 - 5mal umgelenkt wird. Die Anzahl der Umlenkstellen in dieser Stufe stellt immer einen Kompromiß zwischen den Druckverlusten durch Druck- und Reibungskräfte und der Zerstörung der Agglomerate dar. Bei einer 2 - 5maligen Umlenkungen werden die Druckverluste minimiert und gleichzeitig etwa 80 bis 85 % der Agglomerate behandelt.

Durch das Vorteilhafte Breiten- zu Längen-Verhältnis von mindestens 1:10 des Spaltes in der Homogenisierungsstufe wird unabhängig von dessen tatsächlichen geometrischen Abmessungen der hydraulische Durchmesser nahezu halbiert, im Vergleich zu einer Geometrie mit identischer Durchströmfläche und einem Breiten- zu Längen-Verhältnis von etwa 1:1. Hinzu kommt, daß die Reynoldszahl und die Strömungsverluste bei gleicher Strömungsgeschwindigkeit durch den geringeren hydraulischen Durchmesser kleiner werden. Da die Strömungsgeschwindigkeit für beide Geometrien konstant ist, wird der spezifische Einfluß der Wandschubspannungen auf die Schlammsuspension bei einem Verhältnis von 1:10 wesentlich verbessert. Aus Gründen der Betriebssicherheit des Verfahrens kann das geometrische Verhältnis nicht beliebig erhöht werden, da Partikel, deren Durchmesser größer als die Breite des Spaltes ist, diesen zusetzen würden.

Die Auflösung der Agglomerate von Mikroorganismen und / oder Polymeren kann auf mechanischem oder hydraulischem Wege erfolgen. In einer Weiterbildung wird die Desagglomerationsstufe durch ein hydraulisches Wirbelsystem realisiert, indem die Innenfläche eines Rohres beispielsweise mit spiralförmigen Nuten versehen sind oder das Rohr im hydraulischen Sinne eine rauhe Oberfläche besitzt, so daß die Strömung Drallimpulse erhält oder Ablösewirbel entstehen, die zur Zerstörung der Agglomerate führen. Dabei sollten die geometrischen Abmessungen so ausgeführt sein, daß aus abrasiven Gründen die Strömungsgeschwindigkeit nicht größer als 4 m/s (Grundoperationen der chemischen Verfahrenstechnik, 10. Auflage, Deutscher Verlag für Grundstoffindustrie, Leipzig, 1994) und aus hydraulischen Gründen die Reynoldszahl nicht größer als 80.000 sein sollten (vollturbulente Strömung führt zu den höchsten Druckverlusten).

Eine andere Weiterbildung des Verfahrens beeinflußt den Homogenisierungsgrad der Schlammsuspension in der Weise, daß bei wechselnden hydraulischen Randbedingungen, verursacht durch variierende Volumenströme, der Homogenisierungsgrad nahezu konstant bleibt. Dies wird dadurch erreicht, daß mindestens eine der beiden Teilflächen (Innenteil, Außenteil) von mindestens einer der Stufen beweglich gelagert wird. Dadurch kann die Durchströmfläche automatisch über den Strömungsdruck variiert und bei steigendem Volumenstrom vergrößert bzw. bei fallenden Volumenströmen verkleinert werden.

Um keinen zusätzlichen Strömungsdruck für das Verstellen der Durchströmflächen zu benötigen, kann in einer Weiterbildung des Verfahrens die Verstellung der Teilflächen der jeweiligen Stufen auch durch einen getrennten Antrieb erfolgen, der rein mechanisch, elektrisch, hydraulisch oder pneumatisch wirkt. Die Kenngröße zur Positionierung der Teilflächen kann beispielsweise der Volumenstrom oder der Feststoffgehalt der Schlammsuspension sein.

Die bisher dargelegten Verfahren hatten nicht unmittelbar eine Erhöhung der mittleren Geschwindigkeit innerhalb des Verfahrens bzw. durch die Vorrichtung zum Ziel. In dieser Weiterbildung des Verfahrens wird die mittlere Strömungsgeschwindigkeit gezielt angehoben, um den Einfluß der Wandschubspannungen zu erhöhen und die Homogenisierung der Schlammsuspension zu verbessern. Dazu wird der Querschnitt des Ringspaltes der Homogenisierungsstufe verkleinert, so daß sich zumindest eine Verdopplung der Geschwindigkeit ergibt. Die Erhöhung der Wandschubspannungen kann besonders für Schlämme mit hohen Feststoffgehalten von beispielsweise mehr als 4 % eingesetzt werden.

Während des Durchströmens der Vorrichtung wird ein Druck auf die Schlammsuspension ausgeübt. Dieser Strömungsdruck kann für ein Erhöhung der Homogenisierung eingesetzt werden, wenn in einer eigenen Zone, die nach oder innerhalb der jeweiligen Stufe angeordnet sein kann, eine Entspannung stattfinden kann. In dieser Weiterbildung wird die Entspannungszone vorzugsweise am Ende der Homogenisierungsstufe verwirklicht. Dazu wird der Strömungsquerschnitt nach der Homogenisierungsstufe plötzlich und ohne Übergang erweitert. In diesem erweiterten Bereich findet durch die Druckentspannung eine zusätzliche Durchmischung der Suspension statt.

Von entscheidender Bedeutung für die Homogenisierung einer Suspension sind deren rheologische Eigenschaften, im besonderen die Viskosität und das Fließverhalten unter Krafteinfluß. Je höher die Viskosität ist, desto intensiver muß die Zerstörung der Agglomerate und deren Einmischung in die Trägerflüssigkeit erfolgen. Bei Schlammsuspension beispielsweise in der Abwasserreinigung nimmt die Viskosität mit steigendem Feststoffgehalt zu, so daß über einem Feststoffgehalt von etwa 2,5 % TS sich die Viskosität mehr als verfünffacht hat. Um bei diesen Suspensionen vergleichbare Homogenisierungsgrade zu erzielen, wie bei Schlämmen niedriger Viskosität, muß das Verfahren mindestens zweimal auf die Suspension angewendet werden.

Durch die intramolekularen Kräfte der Polymere und / oder Mikroorganismen besitzt ein großer Teil dieser Schlammsuspensionen ein nicht-NEWTONsches Fließverhalten. Die Zähigkeitskräfte sind bei diesem Fließverhalten überwiegend zu Beginn (Ausnahme z. B. rheopektisches Verhalten, tritt bei Schlammsuspension in den genannten Bereichen jedoch nicht auf) einer Behandlung sehr groß, so daß das Verfahren ebenfalls mindestens zweimal auf die Schlammsuspension angewendet werden, um eine ausreichende Homogenisierung erzielen zu können.

Mit zunehmendem Feststoffgehalt werden die intramolekularen Kräfte größer, so daß sich das nicht-NEWTONschen Fließverhalten dahingehend ausprägt, daß die Suspension ein thixotropes Verhalten aufweist. Um das thixotrope Verhalten durch die Anwendung der Weiterbildung des Verfahrens so lange wie möglich zu unterbinden, muß das Verfahren mehrfach auf die Suspension, besonders vorteilhaftweiser etwa 5mal, angewendet werden.

Wenn das Verfahren zur Homogenisierung mehrfach auf die Suspension angewendet worden ist, so bildet sich die ursprüngliche Viskosität und dadurch verbunden die Gelstruktur der Suspension mit zunehmender Ruhezeit wieder zurück. Diese Rückbildung kann kostengünstig dadurch weitgehend verhindert werden, indem der Homogenisierungseinheit ein Mischbehälter nachgeschaltet wird. Durch das Umrühren der Suspension mit einem Mischorgan in dem Mischbehälter, wobei das Mischorgan einen wesentlich geringeren Energieeintrag als die vorgeschaltete Homogenisierungseinheit besitzt, wird verhindert, daß sich die Gelstruktur wieder vollständig regenerieren kann.

Eine weitere Möglichkeit zur zusätzlichen Beseitigung des thixotropen Verhaltens der Schlammsuspension besteht darin, die Gelstruktur durch die Behandlung zu zerstören. Die Grundlage für die Gelstruktur bilden die Polymere und die EPS in den Schlämmen. Dazu wird die Kavitation, wie in der Weiterbildung des Verfahrens dargelegt, nur so weit gesteigert, daß die Polymere und die EPS durch die Druckspitzen während des Zerfalls der Dampfblasen zerstört werden. Die Energiedichte ist bei diesem Verfahrensschritt nicht so hoch, als wenn die Mikroorganismen aufgespaltet werden, da nur die Makromoleküle in der Schlammsuspension zerstört werden müssen, um eine dauerhafte Schädigung der Gelstruktur zu erzielen.

Da die zu behandelnden Schlammsuspensionen wechselnde Feststoffkonzentration aufweisen können, ist es Vorteilhaft, den Druckerzeuger zu regeln, um eine gleich gute Homogenisierung durch das Verfahren zu erzielen. Zur Regelung des Druckerzeugers eigenen sich im besonderen Maße der Volumenstrom und der Druck, wobei in den Weiterbildungen des Verfahrens sowohl der Eingangs- und Ausgangsdruck als auch der Differenzdruck als Regelgröße Verwendung finden können.

Ein großer Teil der Schlamminhaltsstoffe besitzt oberflächenaktive Eigenschaften. Diese Eigenschaften sind durch aktive Zentren in der Molekularstruktur sowohl der Polymere als auch der Mikroorganismen gekennzeichnet. Durch die Bildung von Agglomeraten gehen Teile der aktiven Zentren und der notwendigen Stoffaustauschfläche, besonders der Mikroorganismen verloren, so daß die Reaktivität der Inhaltsstoffe nicht vollständig ausgeschöpft wird. Diese Kenntnisse über die inneren Strukturen führen zu einer Weiterbildung des Verfahrens, bei dem nur ein Teil der gesamten Schlammsuspension behandelt wird. Durch die Homogenisierung werden somit die aktiven Zentren wieder fast vollständig freigelegt und die Stoffaustauschfläche vergrößert, so daß bei einer Mischung mit unbehandeltem Schlamm die Reaktivität des gesamten Mischschlamms positiv beeinflußt werden können. Diese Weiterbildung des Verfahrens stellt somit eine besonders kostengünstige Lösung dar, gerade bei der Behandlung von großen Schlamm-Mengen.

Um die Betriebsstabilität zu Erhöhen ist die Vorrichtung mindestens zweistufig aufgebaut, um in der ersten Stufe eine Zerstörung der Agglomerate durchzuführen. Dadurch wird die Struktur der Schlammsuspension feiner und der mittlere Partikeldurchmesser kleiner. In einer weiteren Stufe wird nun durch Wandschubspannungen eine weitergehende Einmischung und Homogenisierung sowie eine Verbesserung der Fließeigenschaften erzielt.

Durch die Anordnung der Desagglomeration vor der Homogenisierung wird die Gefahr einer Verstopfung der Vorrichtung durch Schlamminhaltsstoffe minimiert und die Betriebsstabilität erhöht.

Eine weitere Maßnahme zur Zerstörung der Agglomerate kann durch eine Veränderung der inneren Oberfläche des Strömungskanals erfolgen. Dazu wird in einer Weiterbildung die Rohrinnenwand so gestaltet, daß sich während der Durchströmung mit der Schlammsuspension Ablösewirbel bilden. Die Wirbel können beispielsweise durch spiralförmig-verlaufende Nuten in oder durch aufgesetzte Schweißperlen auf der Innenwand hervorgerufen werden. Durch die Wirbel werden die Agglomerate auf hydraulischem Wege zerstört und die Schlammsuspension vorgemischt.

Wenn die Umlenkwinkel in der Desagglomerationsstufe je nach Viskosität und Feststoffgehalt der Schlammsuspension zu klein bemessen sind, kann sich die Stufe zusetzen und die Homogenisierung be- bzw. verhindern. Deshalb sollten die Winkel beispielsweise bei hohen Viskositäten von Umlenkung zu Umlenkung verkleinert werden, so daß bei einem großen Umlenkwinkel ein Teil der Agglomerate aufgebrochen und die Viskosität abgesenkt werden kann. In den nachfolgenden Umlenkstellen werden die Winkel immer kleiner, so daß die Agglomerate nach und nach zerstört werden, die Viskosität gesenkt wird und die Einmischung in die Trägerflüssigkeit erfolgt. Durch diese Vorgehensweise wird die Betriebsstabilität erhöht und ein Zusetzen dieser Stufe verhindert. Diese Vorgehensweise zeigt besonders deutlich, warum die Homogenisierung in mindestens zwei Stufen erfolgen sollte, damit in der Homogenisierungsstufe bereits eine teilhomogenisierte Suspension vorliegt und es in dieser nicht zum Zusetzen durch die Schlammpartikel kommen kann.

Bei geringen Viskositäten, ähnlich denen von Wasser, können die Schlamminhaltsstoffe bei großen Umlenkwinkeln den Strombahnen folgen und so eine Zerstörung der Agglomerate nicht in ausreichendem Maße erfolgen. Bei der Vorrichtung wird deshalb in der Stufe zur Zerstörung der Agglomerate ein Winkel zwischen den Umlenkstellen in einem Bereich von 80 bis 110°, besonders vorteilhaft von 90° gewählt. Durch diesen Winkel wird die Suspension direkt auf eine Wand an der Umlenkstelle gedrückt und die Agglomerate durch Wand-Partikel- und zusätzlich durch Partikel-Partikel-Stöße zerstört. Gleichzeitig erfolgt durch die Wirbelablösungen eine gute Einmischung der zerstörten Agglomerate in die Trägerflüssigkeit.

Bei nicht-NEWTONschem Fließverhalten und / oder thixotropen Verhalten wird die Fließfähigkeit einer Suspension mit zunehmender mechanischer Beanspruchung erhöht und die Viskosität abgesenkt. Da der Kraftaufwand und damit der Druckverlust überproportional zur Beanspruchungsstärke der Suspension zunimmt, werden bei dieser Weiterbildung der Vorrichtung die Umlenkwinkel in der Desagglomerationsstufe sukzessive verkleinert. Dadurch wird mit möglichst geringem Kraftaufwand eine Vorverflüssigung der Suspension erzielt und diese Vorverflüssigung bei etwa gleichbleibendem Druckverlust bei der nächsten Umlenkung weiter gesteigert. Zeitgleich erfolgt mit der Zunahme der Verflüssigung die Zerstörung der Schlammagglomerate an den Prallflächen der jeweiligen Umlenkstellen.

Bei Schlämmen mit niedriger Viskosität und Feststoffkonzentrationen wie beispielsweise Schwimmschlamm, ist es für die Effektivität der Homogenisierung von besonderer Bedeutung, in einem hydraulisch optimalen Bereich zu arbeiten. Dieser Bereich kann von außen regelbar verändert oder selbsttätig verändert werden. In einer Weiterbildung der Vorrichtung sind die stufen zweigeteilt, mit einem Innen- und Außenteil, ausgeführt, wobei mindestens ein Teil der Stufen als Druckplatte fungiert. Durch den Strömungsdruck der zugeführten Schlammsuspension wird der Abstand zwischen den beiden Teilen der Stufen selbsttätig eingestellt und so nahezu immer optimale hydraulische Randbedingungen für die Homogenisierung geschaffen.

Neben der Effizienz einer Vorrichtung für ihren speziellen Anwendungsfall liegt ebenfalls ein besonderes Augenmerk auf deren kostengünstiger Herstellung. Im Bereich der Stahl- und Edelstahlherstellung werden unterschiedliche geometrische Formen von Vollmaterialien und Rohren mit unterschiedlichen Marktpreisen produziert. Wenn beispielsweise zwei gleiche Formen eines Rohres (als Außenhülle) und eines Vollmaterials (als Kern) so miteinander verbunden werden, daß zwischen ihnen ein Spalt entsteht, kann diese Konstruktion als Homogenisierungsstufe eingesetzt werden. Der wesentliche Vorteil dieses Aufbaus ist, daß kein spanendes und damit teures Überarbeiten notwendig sind. Je nach Marktpreis könnten dafür unterschiedliche Geometrien eingesetzt werden, die in der Kombination Außenhülle und Kern ähnliche hydraulische Eigenschaften aufweisen.

Besonders bei hohen Feststoffgehalten von etwa 4 % muß in besonderem Maße auf die Betriebssicherheit einer Vorrichtung geachtet werden. Zu diesem Zweck sind in einer Weiterbildung der Vorrichtung die Stufen aus einem Innen- und Außenteil aufgebaut, von denen mindestens ein Teil beweglich gelagert und als Druckplatte ausgeführt ist. Bei einem erhöhtem Druckaufbau in der Vorrichtung, der auf ein Zusetzen der Kanäle hindeutet, kann sich mindestens dieser Teil der Stufen verschieben. Dadurch werden die Strömungsquerschnitte erhöht und das beginnende Zusetzen der Kanäle wieder rückgängig gemacht werden. Um diesen Selbstreinigungsmechanismus der Vorrichtung technisch umzusetzen, sollte die Geometrie der Homogenisierungsstufe trapezförmig ausgebildet sein, wobei die Aufweitung des Trapezes in Strömungsrichtung erfolgt. Um die Druckverluste gering zu halten, werden die Durchströmquerschnitte konstant gehalten, wobei aufgrund des trapezförmigen Längsschnittes der Hauptmischzone der äquivalente hydraulische Durchmesser immer kleiner und damit der Einfluß der Wandschubspannungen sowie der Grad der Homogenisierung immer größer werden.

Um den zusätzlichen Druckverlust zur selbsttätigen Einstellung der beweglichen Druckplatte zu umgehen, kann diese durch eine von außen angelegte Krafteinleitung verstellt werden. Zur Regelung der Druckplattenstellung können als Kenngröße der Volumenstrom und /oder die Feststoffkonzentration und oder die Viskosität abgefragt und verwendet werden.

Eine weitere Erhöhung der Wandschubspannungen kann durch eine Segmentierung der Homogenisierungsstufe erzielt werden.

In besonders vorteilhafter Weise zur vollen Durchmischung der Schlammsuspension können die Segmente der Homogenisierungsstufe weiter zu Düsen ausgebildet werden. Diese Weiterbildung des Verfahrens eignet sich in besonders vorteilhafterweise für Schlammsuspensionen mit hohen Feststoffgehalten und einem geringen Partikelgrößenspektrum.

Werden die Segmente so ausgebildet, daß der Dampfdruck der Trägerflüssigkeit unterschritten wird, kann zusätzlich zu den hydrodynamischen Mischungskräften die Kavitation als Mischungskraft genutzt werden.

Um die Homogenisierung weiter zu steigern, wird in einer Weiterbildung der Vorrichtung die Durchströmfläche der Homogenisierungsstufe in mindestens eine weitere Zone unterteilt. In dieser Zone findet eine Querschnitterweiterung statt, so daß die zuvor aufgebrachten Druckkräfte schlagartig von den Agglomeraten in der Trägerflüssigkeit entfernt werden. Durch diese Entspannung werden in dem erweiternden Querschnitt Verwirbelungen induziert, die eine Verbesserung der Homogenisierung bewirken.

Bei hohen Viskositäten und / oder thixotropem Verhalten der Schlammsuspension ist eine alleinige Entspannung der Druckkräfte in einem erweiterten Querschnitt nicht ausreichend. Deshalb wird in einer Weiterbildung der Vorrichtung am Austritt der ersten Zone der Homogenisierungsstufe der Dampfdruck unterschritten und durch die Querschnittserweiterung ein Mischraum erzielt, in dem die Implosion der Dampfblasen gezielt zur Homogenisierung eingesetzt werden kann.

Werden die Feststoffgehalte in einer Schlammsuspension weiter gesteigert, beispielsweise durch eine vorgeschaltete Entwässerung, so kann die Anwendung einer Vorrichtung zur Homogenisierung nicht mehr ausreichen, um einen hohen Homogenisierungsgrad zu erzielen. In diesem Fall können zwei oder mehr der Homogenisierungseinheiten jeweils mit einem Druckerzeuger zur einer seriell betriebenen Einheit verschaltet werden. Durch die wiederholte Behandlung werden praktisch alle Agglomerate zerstört und eine weitgehende Homogenisierung erzielt.

Wird die Vorrichtung in einem Konzept zur Schlammbehandlung eingebunden, so ist die Einbindung der Behandlungseinheit notwendig. Eine besonders einfache und kostengünstige Möglichkeit ist gegeben, wenn die Behandlungseinheit mit Flanschverbindungen versehen ist, so daß sie in einem vorhandene Rohrleitung eingebunden werden kann.

Im folgenden wird die Erfindung anhand von zeichnerischen Darstellungen erläutert. Es zeigen:
- **Figur 1**: Prinzipdarstellung des Verfahrens aus strömungsdynamischer Sicht mit einem rechteckigen Strörnungskanal, sowohl in der Desagglomerations- als auch in der Homogenisierungsstufe
- **Figur 2**: Prinzipdarstellung des Verfahrens aus strömungsdynamischer Sicht mit einem Ringspalt in der Homogenisierungsstufe
- **Figur 3**: Prinzipdarstellung des Verfahrens für eine Schlammsuspension mit thixo- tropen Eigenschaften zur Teilstrombehandlung und einem nachgeschaltetem Rührbehälter, um die Rückbildung der ursprünglichen Viskosität zu be- hindern
- **Figur 4**: Prinzipdarstellung einer konstruktiven Ausführung für eine zweiteilig Vor- richtung zur Homogenisierung einer Schlammsuspension
- **Figur 5**: Prinzipdarstellung einer konstruktiven Ausführung für eine Vorrichtung zur Homogenisierung einer Schlammsuspension in verschieblicher Ausführung mit trapezförmigem Längsschnitt
- **Figur 6**: Prinzipdarstellung einer konstruktiven Ausführung für eine Vorrichtung zur Homogenisierung einer Schlammsuspension mit segmentiertem Ringspalt
- **Figur 7**: Prinzipdarstellung einer Ausführung für eine Vorrichtung zur Homogenisie- rung einer Schlammsuspension mit veränderlicher und konstanter mittlerer Strömungsgeschwindigkeit

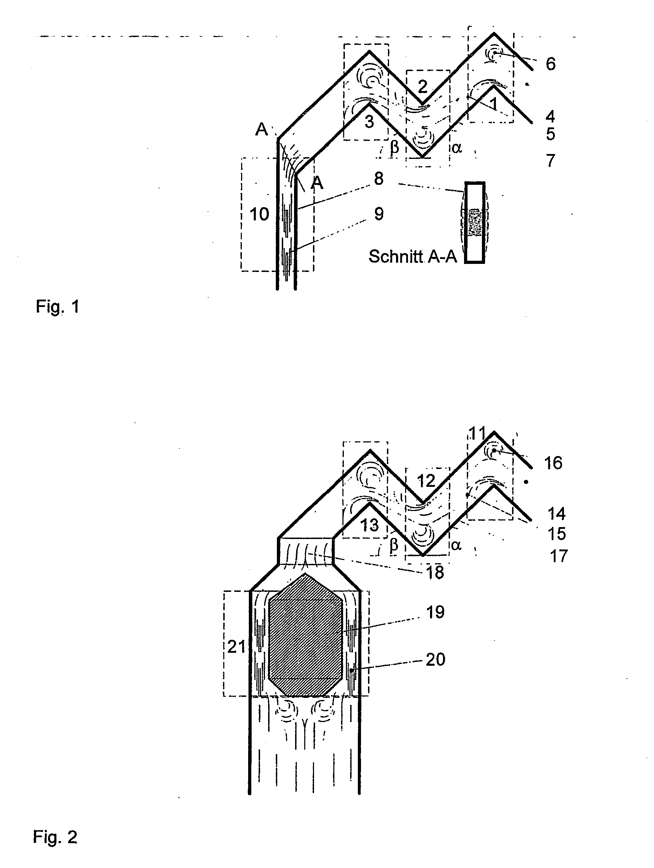

Die Gegenstände der Figuren 1 und 2 und 7 dienen des Erläuterung und sind wicht gegenstand der Ausprüche.

**Fig. 1** erläutert ein Verfahrens- und Vorrichtungsprinzip der Homogenisierung von Schlämmen in der Abwasserreinigung. Die Homogenisierungseinheit besteht aus einer Desagglomerationsstufe 7 und einer Homogenisierungsstufe 8, wobei die Desagglomerationsstufe einen quadratischen und die Homogenisierungsstufe einen rechteckigen Querschnitt aufweist. Die Umlenkung der Schlammsuspension erfolgt an drei Umlenkstellen 1, 2, 3, an denen sich die einzelnen Stromfäden 4 zu hydrodynamischen Zellen (grau hinterlegt), mit Ablöse- 5 und Umlenkwirbel 6, ausbilden. Alle Umlenkstellen sind bei dieser Variante mit gleichem Winkel (= 180° - a (Zufuhrkanal) - b (Abfuhrkanal)) ausgeführt. An der Übergangsstelle (Schnitt A-A) zwischen der Desagglomerations- und Homogenisierungsstufe wird der quadratische Strömungsquerschnitt in einen rechteckigen Querschnitt umgewandelt und dadurch das Verhältnis von benetzter zu durchströmter Fläche 10 erhöht. Die Veränderung dieser hydraulischen Kenngröße führt zu einer Erhöhung der Wandschubspannungen 9, welches eine verbesserte Homogenisierung der Schlammsuspension bewirkt.

Eine ähnliche Ausführung 11 - 17 zeigt **Fig. 2****,** wobei die Trennung 18 zwischen den Stufen deutlicher ist. Der Querschnitt der Homogenisierungsstufe weist einen Ringspalt auf. Die Form des Ringspaltes wird in dem Kanal für die Schlammsuspension durch einen rotationssymmetrischen Kern 19 erzeugt, welcher auf einer Trägerplatte, die Durchgänge für die Suspension aufweist, montiert ist. Diese Ausführungsvariante bewirkt eine weitere Vergrößerung der benetzten zur durchströmten Fläche 21, so daß die Wandschubspannungen 20 und deren Wirkung auf die Schlammsuspension gesteigert werden können.

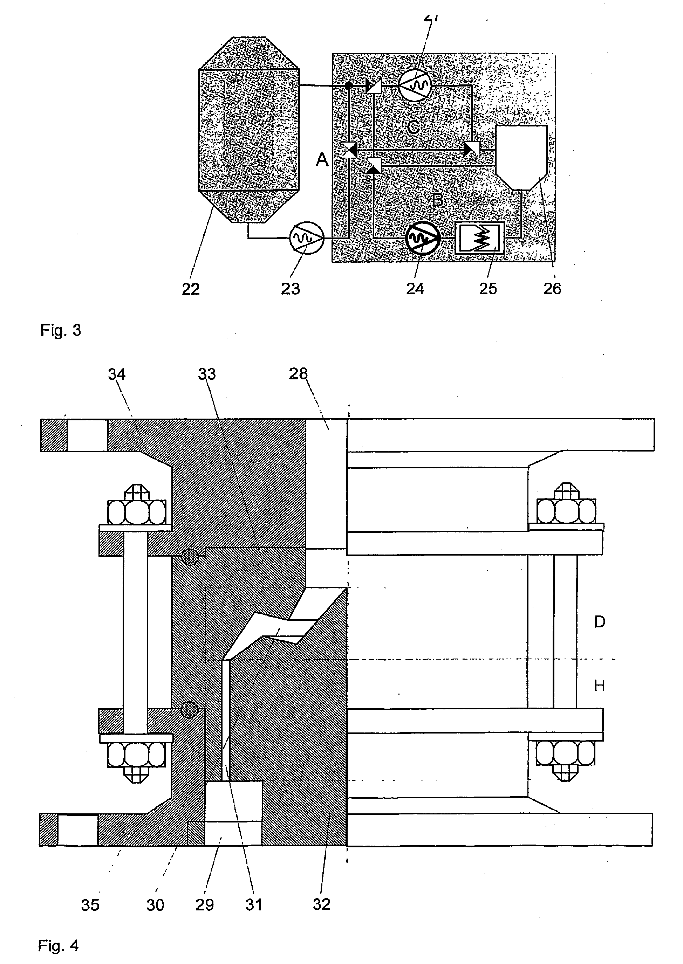

In der **Fig. 3** wird ein Verfahren zur Teilstromhomogenisierung von Schlammsuspensionen mit thixotropen Eigenschaften aufgezeigt. Die Schlammsuspension wird mit einer Pumpe 23 innerhalb des Faulbehälters 22 rezirkuliert (A). Aus dem Rezirkulationsstrom wird ein Teilstrom der Schlammsuspension durch die Pumpe 24 entnommen und in der Behandlungseinheit 25 homogenisiert und für eine weitere Behandlung in den Behälter 26 gefördert (B). Um eine Rückbildung zur ursprünglichen Viskosität der Schlammsuspension zu verhindern, wird diese durch ein Mischorgan (in diesem Fall mit der Pumpe 27) so gemischt, daß sich die Gelstruktur nicht wieder vollständig neu bilden kann (C). Nach der ersten Behandlung mit der Pumpe 24 wird die Suspension wieder aus dem Behälter entnommen und wieder durch die Behandlungseinheit gefördert. Wenn eine ausreichende Homogenisierung der Suspension erzielt ist, kann mittels der Rezirkulationspumpe 27 diese wieder in den Faulbehälter zurückgefördert werden.

**Fig. 4** zeigt eine Vorrichtung gemäß des Erfindung zur Homogenisierung, bei der die Schlammsuspension über die Zufuhröffnung 28 zentral auf eine konzentrisch ausgebildete Desagglomerationsstufe aufgegeben wird. Die Desagglomerations- (D) und Homogenisierungsstufe (H) sind zweiteilig ausgeführt, bestehend aus einem festen Außen- 33 und Innenteil 32. Die Desagglomerationsstufe besteht aus einem Ringkanal, in dem die Suspension zweimal umgelenkt und anschließend in die Homogenisierungsstufe mit ihrem Ringspalt 31 konstanten Querschnitts gefördert wird. Die mit Öffnungen 29 versehene Trägerplatte des Innenteils wird in das untere Gehäuse 35 geschoben, welches über eine Zugstabverbindung mit dem Außenteil und dem oberen Gehäuse 34 verbunden ist.

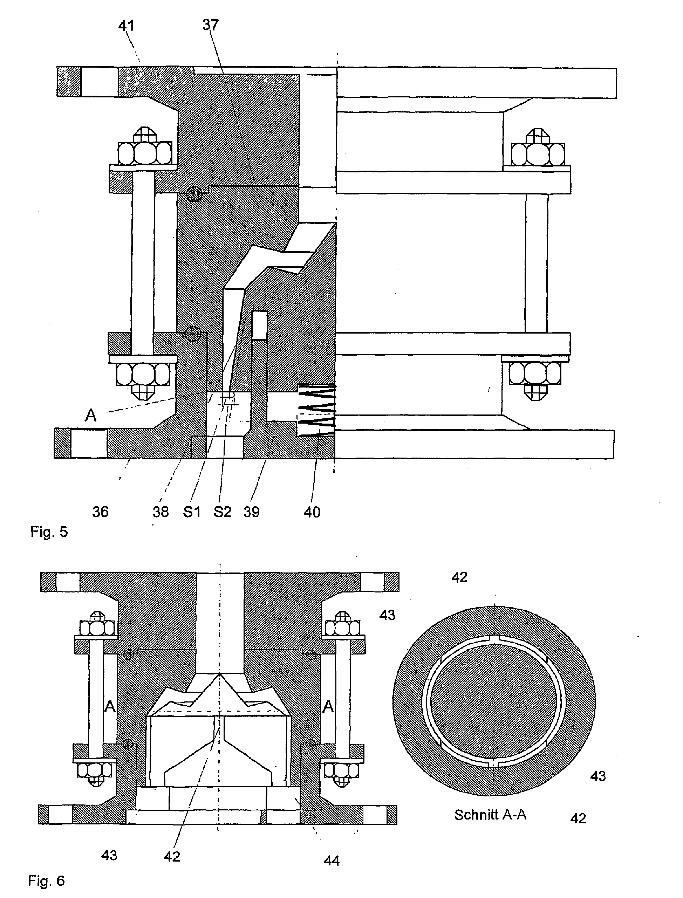

Die Vorrichtung in **Fig. 5** ist ähnlich aufgebaut wie in der vorherigen Ausführung, jedoch wurde hier das Innenteil axial verschieblich und im Bereich der Homogenisierungsstufe mit einem trapezförmigen Längsschnitt des Ringspaltes 38 ausgeführt. Das Innenteil der Vorrichtung ist auf die Trägerplatte 39 aufgesteckt und innerhalb der Führungsnut frei beweglich. Durch ein Federelement 40 wird das Innenteil in die Richtung der Zufuhröffnung gedrückt. Je nach Schlammvolumenstrom können die Durchströmflächen durch den Strömungsdruck über das bewegliche Innenteil variieren. Dabei verändert sich die Durchströmfläche in Bereich der Desagglomerationsstufe über den gesamten Bereich des Verfahrweges bis zum Anschlagpunkt auf der Trägerplatte. Diese Anpassung auf wechselnde Volumenströme im Bereich der Desagglomerationsstufe erhöht besonders bei thixotropen Schlammsuspensionen die Betriebsstabilität, da durch den veränderten Kanalquerschnitt die Kräfte für die Agglomeratzerstörung hoch gehalten, die Viskosität erniedrigt und gleichzeitig ein Zusetzen der Stufe weitestgehend vermieden werden kann.

Die Austrittsfläche der Homogenisierungsstufe bleibt bis zu einer Verfahrstrecke A konstant mit einem Spaltmaß von S1. Bei einem größeren Volumenstrom oder mit zunehmenden Feststoffgehalten, die einen höheren Druckverlust während der Durchströmung zur Folge haben, verschiebt sich das Innenteil über die Verfahrstrecke von A hinaus in Richtung Trägerplatte, so daß sich die Austrittsfläche in der Homogenisierungsstufe bis zum Anschlagpunkt auf das Spaltmaß S2 vergrößert hat. Um den Homogenisierungsgrad hoch zu halten, wird, soweit es der Strömungsdruck auf das Innenteil zuläßt, die Homogenisierungsstufe mit einer kleinen Ringspaltfläche betrieben. Wenn der Strömungsdruck so hoch wird, daß eventuell ein Zusetzen der Stufen erfolgen könnte, vergrößert sich zur Vermeidung des Zusetzens auch die Durchströmfläche der Homogenisierungsstufe. Diese Ausführung führt zur einer hohen Betriebsstabilität des Verfahrens.

Die **Fig. 6** zeigt eine Ausführung der Vorrichtung, in der die Homogenisierungsstufe segmentiert und mit veränderten Durchströmungsquerschnitten ausgeführt ist. Der Steg 42 des Innenteils liegt an der Wand des Außenteils an. Die Querschnittsfläche des Steges erweitert sich, so daß sich die Austrittsfläche im Ringspalt in Durchströmrichtung verkleinert. Am Austritt der Homogenisierungsstufe hat sich die Austrittsfläche 43 gegenüber der Eintrittsfläche etwa halbiert. Durch diese Ausführung kann das Verhältnis von benetzter zu durchströmter Fläche erhöht und die Wirkung der Wandschubspannung zur Homogenisierung der Schlammsuspension verbessert werden.

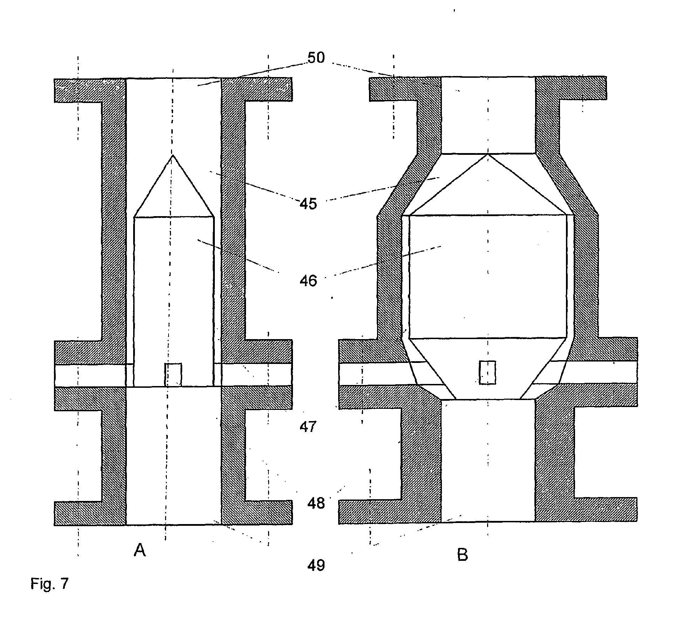

10 **Fig. 7** zeigt zwei unterschiedliche Ausführungen, welche welche nicht gegenstand der Ausprüche sind. Sie sind sehr kostengünstig herzustellen und so ausgeführt, daß in der Variante A die Strömungsgeschwindigkeit sich verändert und in der Variante B praktisch eine konstante mittlere Strömungsgeschwindigkeit während der Durchströmung vorhanden ist. Die Zufuhröffnung 44 des Gehäuses schließt an die Trägerplatte mit den Stegen 48 zum Innenteil an. Die Umlenkung der Schlammsuspension erfolgt im Bereich 45 des Innenteils, und am Ende der Vorrichtung hat der Austrittsquerschnitt 49 wieder die gleiche Größe wie der Eintrittsquerschnitt erreicht.

Die Variante A kann bei geringen Viskositäten und Feststoffgehalten der Schlammsuspension, wie beispielsweise bei Schwimmschlamm, eingesetzt werden. Ein Zusetzen der Vorrichtung ist bei diesen Schlämmen aufgrund ihrer rheologischen und Partikelsystem-Eigenschaften nicht zu erwarten. Durch die wechselnden geometrischen und dadurch auch hydraulischen Eigenschaften werden die Agglomerate an der kegelförmigen Oberfläche des Innenteils aufgebrochen und zerstört und im Bereich des Ringspalts in die Suspension eingemischt.

Bei der Variante B können die Schlämme höhere Viskositäten und Feststoffgehalte aufweisen, wie beispielsweise Überschußschlamm. Die Druckverluste werden durch die praktisch konstante Strömungsgeschwindigkeit minimiert und die Zerstörung der Agglomerate erfolgt überwiegend durch Prall. Die Homogenisierung erfolgt bei dieser Ausführung wiederum durch eine Vergrößerung des benetzten zum durchströmten Flächenverhältnis.

## Patentansprüche

1. Vorrichtung zur Homogenisierung von Klärschlamm zur Verbesserung der stofflichen Umsetzung der Inhaltsstoffe auf chemischem und/oder biologischem Wege, insbesondere zur Behandlung der organischen Bestandteile in der Abwasserreinigung, wobei die Vorrichtung aufweist:
einen Druckerzeuger (24) zum Fördern einer Klärschlammsuspension, und
eine dem Druckerzeuger nachgeschaltete Behandlungseinheit (25) mit einer Zu- und Abfuhröffnung,
wobei die Behandlungseinheit eine Desagglomerationsstufe (D, 30) und eine der Desagglomerationsstufe (D, 30) nachgeschaltete Homogenisierungsstufe (H, 31) aufweist;
wobei die Desagglomerationsstufe (D, 30) konzentrisch um die Zufuhröffnung ausgebildet ist;
wobei die Desagglomerationsstufe (D, 30) in die einen Ringspalt (31) aufweisende Homogenisierungsstufe (H, 31) übergeht;
wobei die Homogenisierungsstufe (H, 31) und die Desagglomerationsstufe (D, 30) in einer Stufe zusammengeführt sind, wobei die zusammengeführte Stufe aus einem Außen- und Innenteil (33, 32) besteht, das Innenteil aus einem Block besteht und zentrisch im Außenteil angeordnet ist; und
wobei in der Desagglomerationsstufe (D, 30) die Schlammsuspension an Umlenkstellen umgelenkt wird und der Winkel an den Umlenkstellen zwischen 80° und 110°, vorzugsweise etwa 90°, beträgt.

2. Vorrichtung nach Anspruch 1,
wobei das Innenteil (32) gegenüber dem Außenteil (33) und/oder das Außenteil gegenüber dem Innenteil beweglich gelagert ist;
wobei durch die Verstellung des Innenteils oder des Außenteils die Durchströmfläche zumindest der Desagglomerationsstufe variierbar ist; und
wobei bei steigendem Volumenstrom die Durchströmfläche der Desagglomerationsstufe (D, 30) vergrößert und bei fallendem Volumenstrom die Durchströmfläche verkleinert wird.

3. Vorrichtung nach Anspruch 2, wobei die Verstellung selbsttätig mittels des Strömungsdrucks oder durch einen getrennten Antrieb, der rein mechanisch, elektrisch, hydraulisch oder pneumatisch wirkt, erfolgt.

4. Vorrichtung nach einem der vorhergehenden Ansprüche, wobei die Desagglomerationsstufe durch ein hydraulisches wirbelsystem realisieat wird, in dem die Innenfläche eines Rohres mit spiralformigen Nuden versehen ist.

5. Vorrichtung nach Anspruch 1, wobei das Außenteil (33) und das Innenteil (32) zueinander verschieblich ausgebildet sind und das Innenteil (32) eine Druckplatte ausbildet, so dass durch den Strömungsdruck der durchströmenden Suspension der Abstand zwischen Außen- und Innenteil (33, 32) variiert wird.

6. Vorrichtung nach einem oder mehreren der vorangehenden Ansprüche, wobei der Ringspalt als segmentierter Ringspalt (31) ausgeführt ist.

7. Vorrichtung nach Anspruch 6, wobei der segmentierte Ringspalt (31) mit mindestens zwei Segmenten ausgeführt ist, wobei sich die Durchströmfläche in Durchströmrichtung immer weiter verkleinert und wobei die Segmente Düsen ausbilden.

8. Vorrichtung nach einem oder mehreren der vorangehenden Ansprüche, wobei mindestens zwei der Behandlungseinheiten (25) hintereinander geschaltet sind.

9. Vorrichtung nach einem oder mehreren der vorangehenden Ansprüche, wobei die Behandlungseinheit (25) als Zwischenflanschverbindung ausgebildet ist.

10. Vorrichtung nach Anspruch 9, wobei die Behandlungseinheit (25) mit mindestens einem Kompensator zur Schwingungsaufnahme versehen ist.

11. Verfahren zur Behandlung von Klärschlamm mit der Vorrichtung nach Anspruch 1, wobei das Außenteil (33) und das Innenteil (32) zueinander verschieblich ausgebildet sind und das Innenteil (32) eine Druckplatte bildet, wobei der Volumenstrom und/oder die Viskosität und/oder der Feststoffgehalt oder deren Kombinationen als Regelgröße mit einem Sensor erfasst werden und wobei in Abhängigkeit der mittels des Sensors erfassten Regelgröße der Abstand zwischen Außen- und Innenteil auf mechanischem, elektrischem, pneumatischen oder hydraulischem Wege eingestellt wird.

12. Verfahren zur Behandlung von Klärschlamm mit der Vorrichtung nach einem der vorhergehenden Ansprüche 1 bis 10, wobei die Vorrichtung derart betrieben wird, dass in der Homogenisierungsstufe (H, 31) die Reynoldszahl der Durchströmung auf eine Reynoldszahl kleiner 80.000 begrenzt ist.

## Claims

1. Apparatus for homogenization of sewage sludge for improving the material conversion of the ingredients in a chemical and/or biological way, in particular for treating the organic components in the wastewater purification, wherein the apparatus comprises:
a pressure generator (24) for conveying a sewage sludge suspension, and
a treatment unit (25) downstream of the pressure generator, including a supply and discharge opening,
wherein the treatment unit has a deagglomeration stage (D, 30) and a homogenization stage (H, 31) downstream of the deagglomeration stage (D, 30);
wherein the deagglomeration stage (D, 30) is formed concentrically around the supply opening;
wherein the deagglomeration stage (D, 30) makes a transition into the homogenization stage (H, 31) having an annular gap (31);
wherein the homogenization stage (H, 31) and the deagglomeration stage (D, 30) are joined in a stage, wherein the joined stage is constituted of an exterior and interior part (33, 32), the interior part is constituted of a block and disposed centrically in the exterior part; and
wherein the sludge suspension is deflected at deflection points in the deagglomeration stage (D, 30), and the angle at the deflection points is between 80° and 110°, preferably about 90°.

2. Apparatus according to claim 1,
wherein the interior part (32) is supported movably with respect to the exterior part (33) and/or the exterior part is supported movably with respect to the interior part;
wherein the flow through area of at least the deagglomeration stage is variable by displacing the interior part or the exterior part; and
wherein the flow through area of the deagglomeration stage (D, 30) is increased with increasing volumetric flow and the flow through area is decreased with decreasing volumetric flow.

3. Apparatus according to claim 2, wherein the adjustment is effected automatically by means of the flow through pressure or by a separate drive, which acts purely mechanically, electrically, hydraulically or pneumatically.

4. Apparatus according to anyone of the preceding claims, wherein the deagglomeration stage is implemented by a hydraulic vortex system by providing the interior surface of a pipe with helical grooves.

5. Apparatus according to claim 1, wherein the exterior part (33) and the interior part (32) are formed displaceably to each other and the interior part (32) forms a pressure plate such that the distance between the exterior and interior part (33, 32) is varied by the flow pressure of the suspension flowing through.

6. Apparatus according to any one or more of the preceding claims, wherein the annular gap is designed as a segmented annular gap (31).

7. Apparatus according to claim 6, wherein the segmented annular gap (31) is designed with at least two segments, wherein the flow through area decreases more and more in flow direction and wherein the segments form nozzles.

8. Apparatus according to any one or more of the preceding claims, wherein at least two of the treatment units (25) are connected in series.

9. Apparatus according to any one or more of the preceding claims, wherein the treatment unit (25) is formed as an intermediate flange connection.

10. Apparatus according to claim 9, wherein the treatment unit (25) is provided with at least one compensator for vibration absorption.

11. Method for treating sewage sludge with the apparatus according to claim 1, wherein the exterior part (33) and the interior part (32) are formed displaceably to each other, and the interior part (32) forms a pressure plate, wherein the volumetric flow and/or the viscosity and/or the solids content or the combinations thereof are detected by a sensor as a control variable, and wherein the distance between exterior and interior part is adjusted in mechanical, electrical, pneumatic or hydraulic manner depending on the control variable detected by means of the sensor.

12. Method for treating sewage sludge with the apparatus according to any one of the preceding claims I to 10, wherein the apparatus is operated such that the Reynolds number of the flow is limited to a Reynolds number smaller than 80,000 in the homogenization stage (H, 31).

## Revendications

1. Dispositif conçu pour l'homogénéisation de boues de curage afin d'améliorer la transformation matérielle des substances renfermées, par voie(s) chimique et/ou biologique, notamment en vue du traitement des composants organiques lors de l'épuration des eaux usées,
ledit dispositif comprenant :
un générateur de pression (24) dédié au convoyage d'une suspension de boues de curage, et
une unité de traitement (25) implantée en aval dudit générateur de pression, munie d'un orifice d'arrivée et d'un orifice d'évacuation,
ladite unité de traitement comportant un étage de désagglomération (D, 30) et un étage d'homogénéisation (H, 31) situé en aval dudit étage de désagglomération (D, 30) ;
l'étage de désagglomération (D, 30) étant ménagé concentriquement autour de l'orifice d' arrivée ;
ledit étage de désagglomération (D, 30) fusionnant dans l'étage d'homogénéisation (H, 31) présentant un interstice annulaire (31) ;
ledit étage d'homogénéisation (H, 31) et ledit étage de désagglomération (D, 30) étant regroupés en un étage, sachant que l'étage regroupé est composé de parties extérieure et intérieure (33, 32) et que ladite partie intérieure, constituée d'un bloc, occupe une position centrée dans ladite partie extérieure ; et
ladite suspension de boues de curage étant déviée dans des zones de renvoi, dans l'étage de désagglomération (D, 30), et l'angle mesurant entre 80° et 110°, de préférence environ 90° dans lesdites zones de renvoi.

2. Dispositif selon la revendication 1,
la partie intérieure (32) étant montée mobile par rapport à la partie extérieure (33), et/ou ladite partie extérieure étant montée mobile par rapport à ladite partie intérieure ;
le réglage de ladite partie intérieure ou de ladite partie extérieure permettant de faire varier au moins la surface d'écoulement de l'étage de désagglomération ; et
ladite surface d'écoulement de l'étage de désagglomération (D, 30) étant augmentée lorsque le débit volumique croît, et diminuée lorsque ledit débit volumique décroît.

3. Dispositif selon la revendication 2, le réglage s'opérant automatiquement sous l'effet de la pression d'écoulement, ou par l'intermédiaire d'un entraînement distinct à action purement mécanique, électrique, hydraulique ou pneumatique.

4. Dispositif selon l'une des revendications précédentes, l'étage de désagglomération étant matérialisé par un système hydraulique de tourbillonnement, la surface intérieure d'une tubulure étant pourvue de rainures hélicoïdales.

5. Dispositif selon la revendication 1, la partie extérieure (33) et la partie intérieure (32) étant réalisées avec faculté de coulissement réciproque, et ladite partie intérieure (32) se présentant comme une platine de pression, de sorte que la pression d'écoulement de la suspension en circulation fait varier la distance entre lesdites parties extérieure et intérieure (33, 32).

6. Dispositif selon l'une ou plusieurs des revendications précédentes, l'interstice annulaire étant réalisé sous la forme d'un interstice annulaire segmenté (31).

7. Dispositif selon la revendication 6, l'interstice annulaire segmenté (31) comptant au moins deux segments, la surface d'écoulement s'amenuisant continûment dans la direction d'écoulement, et lesdits segments formant des buses.

8. Dispositif selon l'une ou plusieurs des revendications précédentes, au moins deux, parmi les unités de traitement (25), étant agencées en succession mutuelle.

9. Dispositif selon l'une ou plusieurs des revendications précédentes, l'unité de traitement (25) étant réalisée sous la forme d'une solidarisation à bridage intermédiaire.

10. Dispositif selon la revendication 9, l'unité de traitement (25) étant dotée d'au moins un compensateur, en vue de l'absorption de vibrations.

11. Procédé de traitement de boues de curage à l'aide du dispositif selon la revendication 1, la partie extérieure (33) et la partie intérieure (32) étant réalisées avec faculté de coulissement réciproque, et ladite partie intérieure (32) se présentant comme une platine de pression, sachant que le débit volumique et/ou la viscosité et/ou la teneur en corps solides, voire les combinaisons de ces derniers, est (sont) détecté(e)(s) par un capteur, en tant que grandeur de régulation, et sachant que la distance séparant lesdites parties extérieure et intérieure est réglée en mode mécanique, électrique, pneumatique ou hydraulique, en fonction de ladite grandeur de régulation détectée au moyen dudit capteur.

12. Procédé de traitement de boues de curage à l'aide du dispositif selon l'une des revendications précédentes 1 à 10, ledit dispositif étant actionné de façon telle que le nombre de Reynolds de l'écoulement traversant soit limité, dans l'étage d'homogénéisation (H, 31), à un nombre de Reynolds inférieur à 80 000.
